Europäisches Patentamt

European Patent Office

Office européen des brevets

(11) Publication number: **0 307 012**
**A1**

## EUROPEAN PATENT APPLICATION

(21) Application number: **88201217.2**

(22) Date of filing: **14.06.85**

(51) Int. Cl.⁴: **B65B 7/28**

(43) Date of publication of application:
**15.03.89 Bulletin 89/11**

(60) Publication number of the earlier application in accordance with Art.76 EPC: **0 208 810**

(84) Designated Contracting States:
**CH DE FR GB LI NL SE**

(71) Applicant: **Shikoku Kakooki Co., Ltd.**
**10-1, Aza-Nishinokawa Tarohachizu**
**Kitajima-cho**
**Itano-gun Tokushima(JP)**

(72) Inventor: **Shimokawa, Masao**
**83, 4-chome, Minami-Showa**
**Tokushima-shi Tokushima-ken(JP)**
Inventor: **Tada, Yoshio**
**38-2, Aza-Shinden Nishi-Oe Kamojima-cho**
**Oe-gun Tokushima-ken(JP)**

(74) Representative: **Noz, Franciscus Xaverius, Ir.**
**Algemeen Octrooibureau P.O. Box 645**
**NL-5600 AP Eindhoven(NL)**

(54) Cap-heat sealing apparatus for containers.

(57) A cap heat-sealing apparatus for containers comprises a stationary pressing member (18), and movable pressing members (19) arranged around the statonary pressing member (18) and identical in number to the number of corners of a container opening fitting portion (8) of a polygonal cap (5) formed at its periphery for heat sealing. The stationary pressing member (18) has an outer periphery shaped in conformity with the shape of the inner periphery of the fitting portion (8). Each of the movable pressing members (19) is movable toward or away form the stationary pressing member (18) in a horizontal direction through the center of the stationary pressing member (18) and the corner thereof opposed to the movable pressing member (19). Each movable pressing member (19) has a pressing face V-shaped when seen from above to conform with an outer peripheral portion of the stationary pressing member (18) including one corner thereof so that when the movable pressing members (19) are brought toward the stationary pressing member (18), the pressing faces thereof are combined to conform with the entire outer periphery of the member (18).

FIG. 5

The invention relates to a cap heat-sealing apparatus for containers wherein a fitting portion formed on a peripheral edge of a square cap as upwardly projecting therefrom is fitted to an opening edge of the container and thereafter the fitting portion is heat-sealed to the container opening edge, when heat-sealing the fitting portion to the opening edge, having means for pressing the fitting portion to the container opening edge comprising a stationary pressing member provided on a horizontal support plate at the lower surface thereof as downwardly projecting therefrom and having an outer peripheral surface shaped in the form of a square in conformity with the inner peripheral surface of the fitting portion.

Such an apparatus is known from EP-A-0099159. Said known apparatus comprises two movable pressing members co-operating with the stationary pressing member. Now according the invention the apparatus comprises four movable pressing members arranged around the stationary pressing member and each having a pressing face V-shaped when seen from above to conform with part of the outer peripheral surface of the stationary pressing member including one corner thereof so that when the movable pressing members are brought toward the stationary pressing member, the pressing faces thereof form a square in combination to conform with the entire outer peripheral surface of the stationary pressing member, whilst each movable pressing member is movably hold diagonally of the square formed by the outer peripheral surface of the stationary pressing member by a slide guide member, and a means for moving each movable pressing member toward or away the stationary pressing member has been provided since the fitting portion of the cap is pressed by the movable pressing members which are equal in number to the number of corners of the fitting portion, the entire fitting portion can be pressed uniformly. This overcomes the problem that the contents would leak from the corner of the fitting portion.

For illustrative purposes, an embodiment of the present invention will be described below with reference to the accompanying drawings, in which:

Fig. 1 is a perspective view showing a container and a cap before being fitted thereto;

Fig. 2 is an enlarged fragmentary view in vertical section showing the cap as fitted in the container;

Fig. 3 is a side elevation partly in section and showing a cap heat-sealing apparatus and a container transport conveyor;

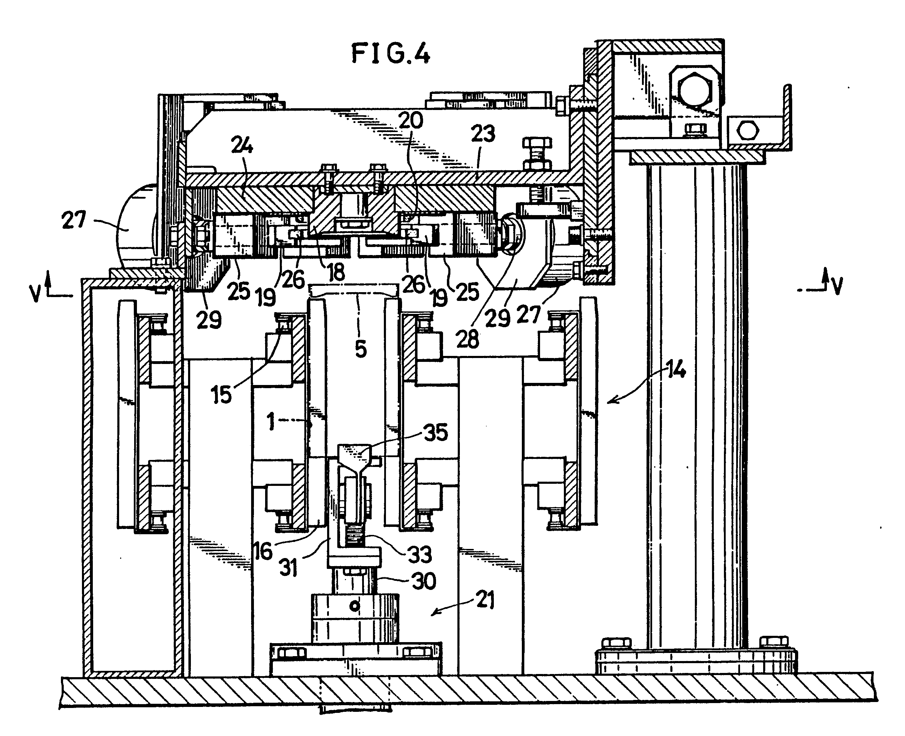

Fig. 4 is an enlarged view in vertical section taken along the line IV-IV in Fig. 3;

Fig. 5 is a view in horizontal section taken along the line V-V in Fig. 4;

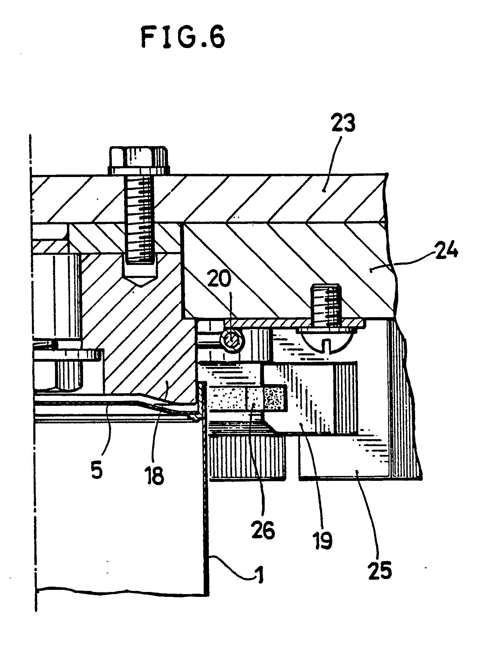

Fig. 6 is an enlarged fragmentary view in vertical section showing the cap heat-sealing apparatus along with the container and the cap; and

Fig. 7 is an enlarged view in vertical section taken along the line VII-VII in Fig. 3.

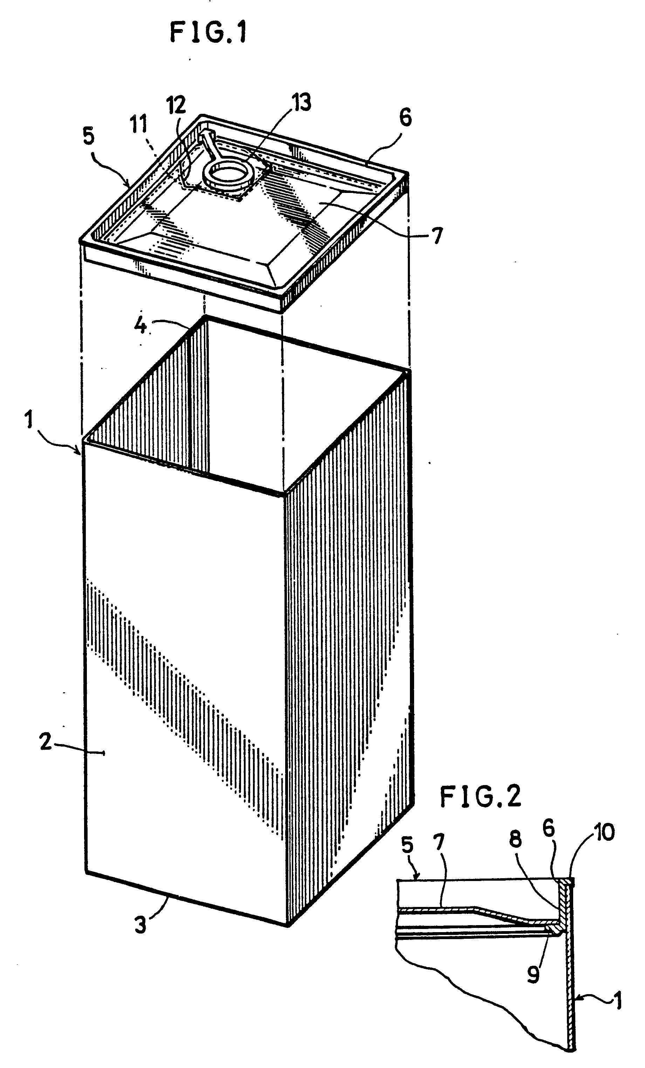

Before describing the cap heat-sealing apparatus for containers, the container and the cap shown in Figs. 1 and 2 will be described first.

Although not illustrated in detail, the container 1 is integrally made of a laminate comprising a thermoplastic synthetic resin outer layer, paper layer, adhesive layer, aluminum foil layer and thermoplastic synthetic resin inner layer which are arranged in the order mentioned. The container 1 comprises a body 2 having a square horizontal section and a bottom closure 3 formed by folding portions of the laminate into a flat form. The body 2 has a seam 4 of twofold thickness extending longitudinally of the body and formed when the laminate is shaped into the body 2 in the form of a square tube by lapping one end of the laminate over the other end thereof and joining the ends together. The cap 5 comprises a joint frame 6 of thermoplastic synthetic resin in the form of a square ring, and a square top wall 7 made of the same laminate as the container 1 The joint frame 6 comprises a fitting portion 8 square in horizontal section, so sized as to fit in the opening of the container 1 and adapted for heat sealing, an inner horizontal flange 9 integral with the lower end of the fitting portion 8 and having attached to its upper side the lower surface of the peripheral edge portion of the top wall 7, and an outer horizontal flange 10 integral with the upper end of the fitting portion 8 and adapted to bear on the upper edge of the container 1 when the fitting portion 8 is fitted into the container opening. At one of the four corners of the joint frame 6, the top wall 7 has an annular portion 11 attached to its rear side and provided along the portion thereof serving as a spout when the container is opened. An annular thin wall 12 for forming the spout is provided at the widthwise middle of the annular portion 11, i.e. of the looped bar forming this portion. A pull ring 13 integral with the thin wall 12 is disposed inside thereof on the upper surface of the top wall 7.

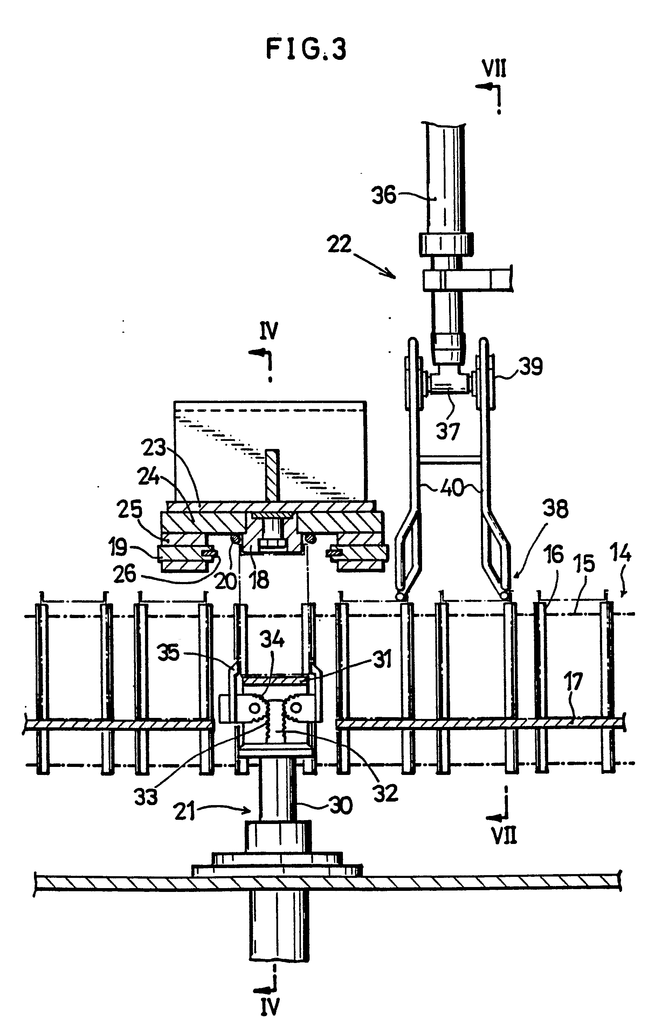

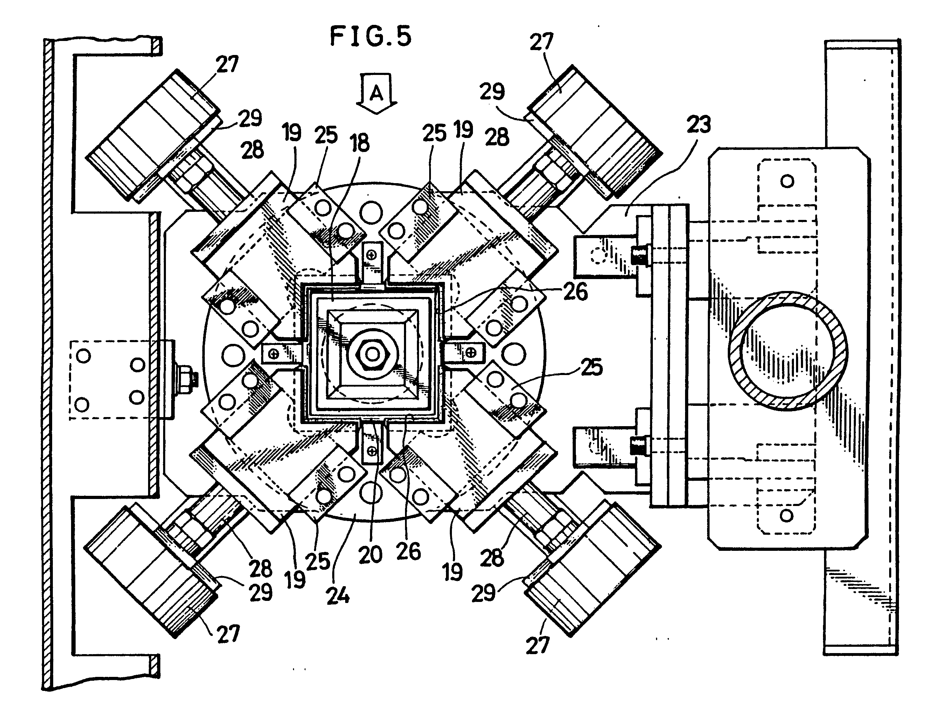

As shown in Fig. 3, the heat-sealing apparatus is disposed at an intermediate portion of the path of travel of a container transport conveyor 14. The conveyor 14 comprises a pair of intermittently driven endless chains 15 arranged side by side, and a multiplicity of container holders 16 attached to the chains 15 and arranged longitudinally thereof. Each holder 16 comprises a pair of vertical pieces in the form of a shallow channel when seen from above and attached as directed outward to the chains 15, the pair of vertical pieces defining a space therebetween for accommodating the container 1. The holder 16 restrains the container 1 from horizontal movement but renders the container free to move vertically. A rail 17 is disposed below and in parallel with the path of feed travel of the holders 16 for supporting the bottom of the container for guiding. Containers 1 having caps 5 fitted to the opening edge thereof are transported in the direction of arrow A in Fig. 5 by the conveyor 14 and the rail 17.

The cap heat-sealing apparatus comprises a stationary pressing member 18, movable pressing members 19 arranged around the stationary pressing member 18 and equal in number to the number of corners of the fitting portion 8, i.e. four members 19, a high-frequency coil 20 in the form of a square ring and provided around the stationary pressing member 18, a container lifter 21 disposed at an intermediate portion of the path of travel of the container holder 16 and positioned below the stationary pressing member 18, and a preheating heater 22 provided at an intermediate portion of the path of travel of the container holder 16 upstream of the container lifter 21.

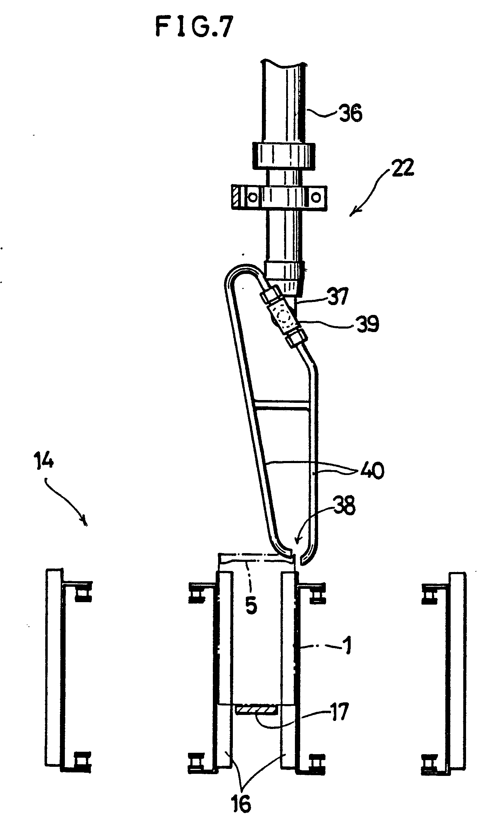

The stationary pressing member 19 is attached by an annular plate 24 to a horizontal support plate 23 extending over and across the path of travel of the holder 16 on the conveyor 14 and is directed downward. The upper half of the member 18 is fitted in the annular plate 24, with the lower half thereof projecting downward from the plate 24. The outer periphery of the projection is square when seen from above to conform with the inner periphery of the fitting portion 8. Each of the movable pressing members 19 is movably supported by a slide guide member 25 in the form of a ripping channel so as to be movable toward or away from the stationary pressing member 18 diagonally of the square of the stationary member 18. The direction of the movement intersects the direction of transport of containers, A, at an angle of 45 degrees. Each movable pressing member 19 has a pressing face which is V-shaped at an angle of 90 degrees when seen from above to conform with an outer peripheral portion of the stationary pressing member 18 including one corner thereof. When the movable pressing members 19 are brought toward the stationary pressing member 18, the pressing faces are combined to form a square in conformity with the outer periphery of the stationary pressing member 18. An elastic member 26 as of heat-resistant rubber is attached to the pressing face of each movable member 19 at an intermediate portion of its height. Arranged outside the arrangement of the movable pressing members 19 are thin-type hydraulic cylinders 27 which are identical in number to the number of the members 19, i.e. four cylinders 27. Each hydraulic cylinder 27 has its piston rod 28 directed inward and is suspended from and attached to the support plate 23 by a bracket 29. The piston rod 28 is connected to the corresponding movable member 19. The high-frequency coil 20 is provided around the stationary pressing member 18 at a distance therefrom and is attached to the lower surface of the annular plate 24 by a bracket so as to be positioned above the movable pressing members 19 when the members 19 are brought close to the member 18. The container lifter 21 comprises a vertical lift tube 30 and a support member 31 and is so disposed as to fill a space formed in the rail 17. When the support member 31 is positioned at the lower limit of its vertical stroke, the upper surface of the support member 31 is flush with the upper surface of the rail 17. A lift bar 32 inserted into the lift tube 30 is movable relative to the tube 30 and has an upper end projecting upward form the lift tube 30. The projection is formed with a pair of racks 33 in mesh with semicircular pinions 34. A pair of container holding pawls 35 having the pinions 34 is pivoted to the support member 31. The lift bar 32, when moving relative to the lift tube 30, pivotally moves the holding pawls 35 in directions opposite to each other by means of the rack 33 and the pinions 34, thus opening or closing the pawls 35. When closed, the pawls 35 hold a bottom portion of the container 1 on the front and rear sides thereof, whereby the container 1 to be raised by the support member 31 can be held in a stable posture. The preheating heater 22 comprises a vertical hot air supply duct 36, a branch tube 37 attached to the lower end of the duct 36 and having horizontal front and rear openings, and two hot air jet nozzles 38 connected to the two open ends of the tube 37, respectively. The two nozzles 38 are spaced apart from each other in the direction of transport of containers, A, by a distance corresponding to one-pitch amount of intermittent travel of the holders 16. As shown in detail in Fig. 7, each nozzle 38 comprises two bent pipes 40 extending downward from a union 39. The two lower orifices at the ends of the pipes 40 are opposed to each other transversely of the direction A and directed toward the upper end of the seam 5 of the container body 2 as held by a holder 16, from inside and outside of the seam.

By the conveyor 14, a container 1 with a cap 5 fitted to its opening edge is fed onto the container lifter 21. Before this, when the container 1 is brought to the position of the preheating heater 22 upstream of the lifter 21, the two jet nozzles 38 applies hot air to the upper end of the seam 4 of the container 1 in two stages in succession, whereby the portion of seam 4 only is locally preheated.

When the container 1 is placed onto the lifter 21, the lifter 21 operates to raise the container 1, causing the fitting portion 8 of the cap 5 fitted in the container opening to fit around the outer periphery of the stationary pressing member 18. Subsequently, the hydraulic cylinders 27 operate, advancing their piston rods 28 together and moving the movable pressing members 19 toward the stationary pressing member 18, whereby the elastic members 26 of the members 19 are pressed against the outer periphery of the opening edge of the container 1, with the stationary pressing member 18 fitting in the fitting portion 8. Consequently, the opening edge of the container and the cap fitting portion 8 fitted thereto are pressed against each other. In this state, the high-frequency coil 20 is energized for a required period of time to heat the aluminum foil by induction. As a result, the thermoplastic resin layer on the inner surface of the opening edge of the container 1 and the thermoplastic synthetic resin forming the fitting portion B of the cap are fused with each other for heat sealing.

## Claims

1. A cap heat-sealing apparatus for containers (1) wherein a fitting portion (8) formed on a peripheral edge of a square cap (5) as upwardly projecting therefrom is fitted to an opening edge of the container (1) and thereafter the fitting portion (8) is heat-sealed to the container (1) opening edge, when heat-sealing the fitting portion (8) to the opening edge, having means for pressing the fitting portion to the container opening edge comprising a stationary pressing member (18) provided on a horizontal support plate (23) at the lower surface thereof as downwardly projecting therefrom and having an outer peripheral surface shaped in the form of a square in conformity with the inner peripheral surface of the fitting portion (8) characterised in that the apparatus comprises four movable pressing members (19) arranged around the stationary pressing member (18) and each having a pressing face V-shaped when seen from above to conform with part of the outer peripheral surface of the stationary pressing member (18) including one corner thereof so that when the movable pressing members (19) are brought toward the stationary pressing member (18), the pressing faces thereof form a square in combination to conform with the entire outer peripheral surface of the stationary pressing member (18), whilst each movable pressing member (19) is movably hold diagonally of the square formed by the outer peripheral surface of the stationary pressing member (18) by a slide guide member (25) and a means (27, 28) for moving each movable pressing member (19) toward or away the stationary pressing member (18) has been provided.

2. An apparatus as defined in claim 1 wherein an elastic member (26) is attached to the pressing face of each movable pressing member (19).

3. An apparatus as defined in claim 1 or 2 wherein an annular high-frequencey coil (20) is provided around the stationary pressing member (18) so as to be positioned above the movable pressing members (19) when the members (19) are brought toward the stationary pressing member (18).

4. An apparatus as defined in any preceeding claim wherein each movable pressing member (19) is supported by a slide guide member (25) attached to an horizontal support plate (23), and the movable pressing members (19) are respectively connected to the piston rods (28) of a plurality of hydraulic cylinders (27) which are equal in number to the number of the pressing members (19).

FIG.1

FIG.2

# FIG.3

# FIG.4

EP 0 307 012 A1

# FIG.5

EP 0 307 012 A1

# FIG.6

EP 0·307 012 A1

# FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 099 159  (KATSUHIRO)<br>* Page 4, line 22 - page 5, line 18;<br>page 8, line 17 - page 11, line 9;<br>figures 1,3,4,7 * | 1-3 | B 65 B   7/28 |
| Y | US-A-2 241 711  (LOWEY)<br>* Page 2, column 1, line 14 - page 3,<br>column 1, line 2; figures 1-12 * | 1-3 | |
| A | GB-A-1 235 275  (SHELL)<br>* Page 2, lines 23-109; figures 1-2 * | 1,4 | |
| A | US-A-3 379 595  (BRACEY)<br>* Column 3, line 14 - column 4, line<br>32; figures 1-3 * | 1,4 | |
| | | | TECHNICAL FIELDS SEARCHED (Int. Cl.4) |
| | | | B 65 B<br>B 31 B<br>B 29 C |

The present search report has been drawn up for all claims

| Place of search | Date of completion of the search | Examiner |
|---|---|---|
| THE HAGUE | 29-08-1988 | CLAEYS H.C.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)